# EUROPEAN PATENT SPECIFICATION

(11) **EP 2 187 080 B1**
(45) Date of publication and mention of the grant of the patent: **21.10.2015**
(21) Application number: 07807354.1
(22) Date of filing: 14.09.2007
(51) Int. Cl.: B66B 11/08, H02K 7/106, B66D 5/08, B66D 5/30, B66B 11/04, F16D 121/22, H02K 7/102, H02K 21/14, F16D 65/22, F16D 51/26, F16D 51/20

(54) **ELEVATOR HOIST**
AUFZUGWINDE
TREUIL D'ASCENSEUR

(43) Date of publication of application: 19.05.2010
(73) Proprietor: Mitsubishi Electric Corporation, Chiyoda-ku Tokyo 100-8310 (JP)
(72) Inventor: OKADA, Daisuke, Tokyo 100-8310 (JP)
(74) Representative: Hoffmann Eitle
(86) International application number: PCT/JP2007/067950
(87) International publication number: WO 2009/034642

(56) References cited:
- EP-A1- 1 655 259
- WO-A1-2004/005178
- WO-A1-2004/076328
- JP-A- 2003 097 610
- JP-A- 2003 097 610
- JP-A- 2004 189 418
- JP-A- 2007 022 772

## Description

### Technical Field

The present invention relates to an elevator hoist including a braking device.

### Background Art

Conventionally, a hoist for an elevator, which includes a braking device provided inside a circularly-recessed member integrated with a driving sheave, has been proposed. In the braking device, brake arms are turned to move brake pieces into contact with and away from the circularly-recessed member. An armature is mounted to the brake arms. Inside the circularly-recessed member, brake springs, each being for urging the brake arm in a direction for bringing the brake piece into contact with the circularly-recessed member, and an electromagnet for displacing the armature in a direction for moving the brake pieces away from the circularly-recessed member against a urging force of the brake springs are provided.

The rotation of the circularly-recessed member is braked by the contact of the brake pieces with the circularly-recessed member. The braking force applied to the circularly-recessed member is cancelled by the separation of the brake pieces from the circularly-recessed member. The electromagnet is mounted to a support plate provided to a base member for supporting the circularly-recessed member (see Patent Document 1).

Patent Document 1: JP 3537348 B JP 2003/097610 A discloses features falling under the preamble of claim 1. EP 1 655 259 A1 is further prior art.

### Disclosure of the Invention

### Problem to be solved by the Invention

In the conventional hoist for the elevator as described above, magnetic bodies (for example, the support plate, the circularly-recessed member, and the like) are provided around the electromagnet and the armature. Therefore, a part of a magnetic flux generated by the electromagnet leaks from the armature to the magnetic bodies situated there around. Therefore, the amount of magnetic flux passing through a gap between the electromagnet and the armature is reduced to decrease an attraction force of the electromagnet to the armature.

The present invention has been made to solve the problem described above, and has an object to provide an elevator hoist capable of preventing an attraction force of an electromagnet from being reduced.

### Means for solving the Problem

According to the present invention, there is provided an elevator hoist having the features of claim 1.

### Brief Description of the Drawings

FIG. 1 is a longitudinal sectional view illustrating an elevator hoist according to a first embodiment of the present invention.
FIG. 2 is a front view illustrating the elevator hoist illustrated in FIG. 1.
FIG. 3 is a sectional view illustrating a positional relationship between an electromagnetic magnet, a mover, and a magnetic-flux leaking member illustrated in FIG. 2.
FIG. 4 is a sectional view taken along the line IV-IV of FIG. 3.
FIG. 5 is a sectional view taken along the line V-V of FIG. 4.
FIG. 6 is a longitudinal sectional view illustrating the elevator hoist according to an embodiment not falling into the scope of the invention
FIG. 7 is a front view illustrating the elevator hoist illustrated in FIG. 6.
FIG. 8 is a sectional view taken along the line VIII-VIII of
FIG. 7.

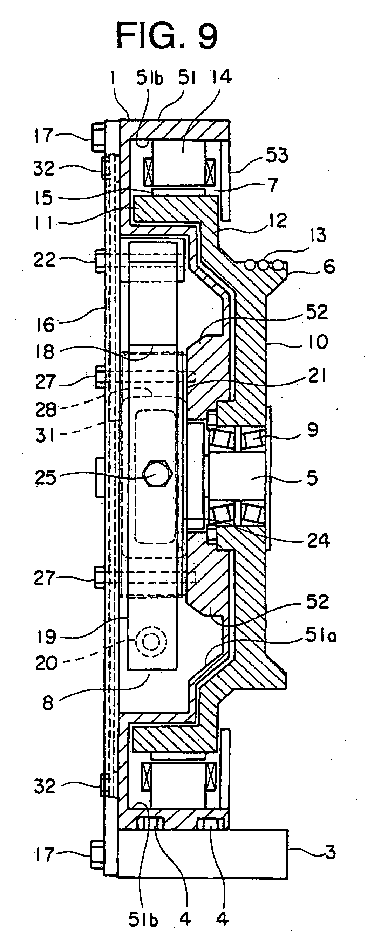

FIG. 9 is a longitudinal sectional view illustrating the elevator hoist according to an embodiment not falling within the scope of the invention

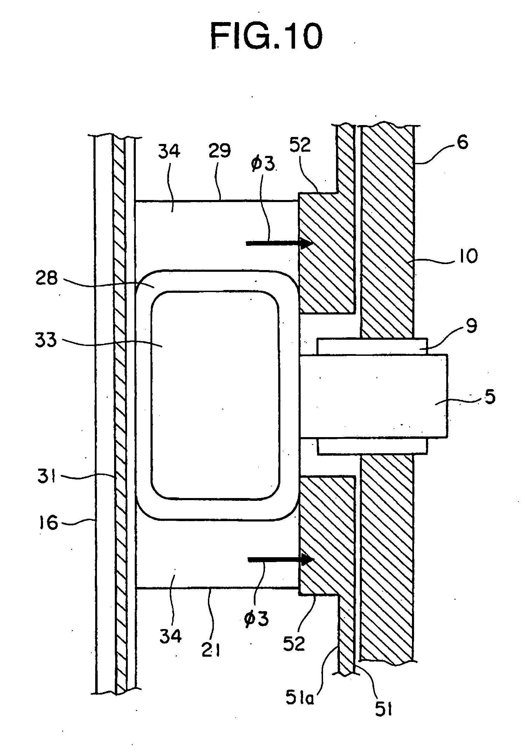

FIG. 10 is a sectional view illustrating a principal part of the hoist illustrated in FIG. 9.

### Best Mode for carrying out the Invention

Hereinafter, the preferred embodiment of the present invention is described referring to the drawings.

### First Embodiment

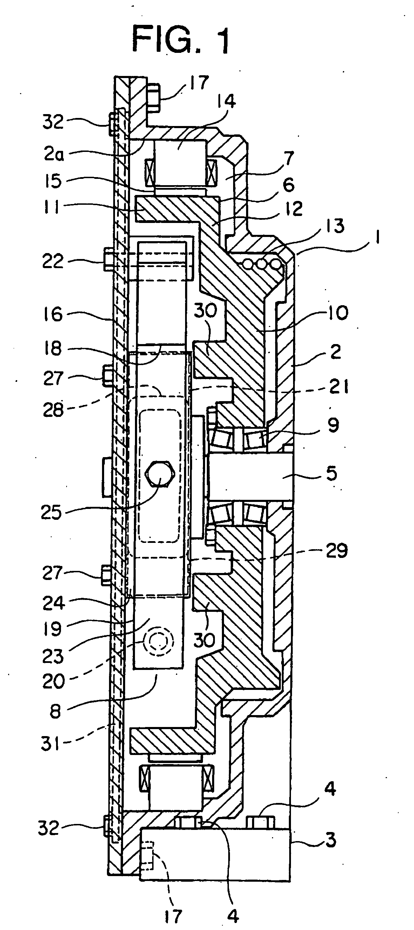

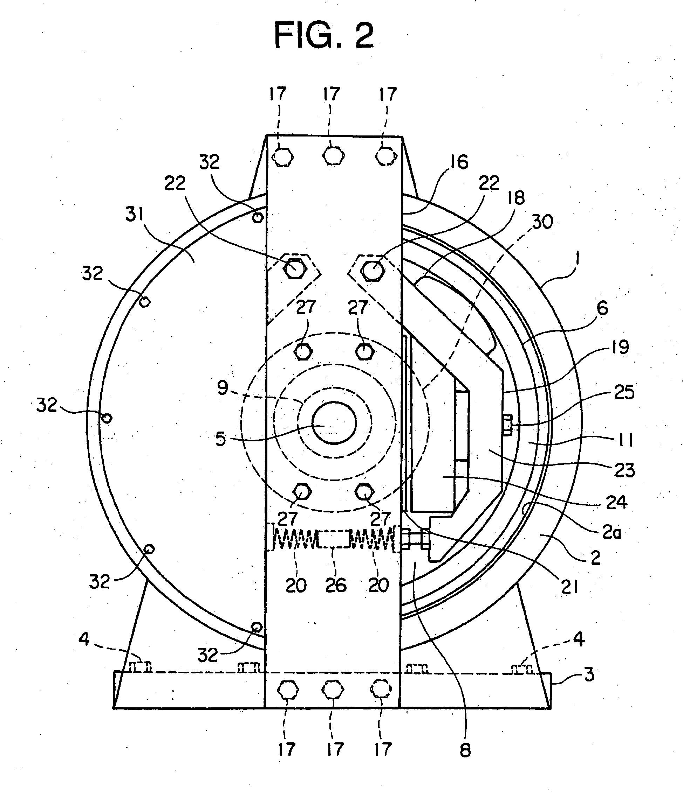

FIG. 1 is a longitudinal sectional view illustrating an elevator hoist according to a first embodiment of the present invention. FIG. 2 is a front view illustrating the elevator hoist illustrated in FIG. 1. FIG. 2 is the front view illustrating the hoist in a state where a part of covers 31 is removed. In the drawings, a housing 1, which is provided in a hoistway, includes: a case part 2 provided with an open portion 2a; and a leg part 3 for supporting the case part 2. The leg part 3 is fixed in the hoistway by bolts 4. The housing 1 is made of a magnetic material (for example, iron or the like).

The case part 2 is open in a thickness direction of the case part 2 through the open portion 2a. The case part 2 is arranged with the thickness direction of the case part 2 in alignment with a horizontal direction. A dimension of the case part 2 in the thickness direction is smaller than a radial dimension of the case part 2. A main shaft 5 arranged along the thickness direction of the case part 2 is fixed inside the case part 2.

Inside the case part 2, a rotating body 6 which is rotatable about the main shaft 5, a motor 7 (FIG. 1) for rotating the rotating body 6, and a braking device 8 for braking the rotation of the rotating body 6 are provided.

The rotating body 6 is provided to the main shaft 5 through an intermediation of a bearing 9. The rotating body 6 includes: a disc-like sheave portion 10; a cylindrical portion 11 having a larger inner diameter than an outer diameter of the sheave portion 10; and a connection portion 12 for connecting the sheave portion 10 and the cylindrical portion 11 to each other. As a result, the rotating body 6 has a bowl-like shape. The sheave portion 10, the cylindrical portion 11, and the connection portion 12 corresponds to an integrally formed magnetic body.

Around an outer circumference of the sheave portion 10, a plurality of main ropes 13 (FIG. 1) for suspending a car and a counterweight (either not shown) are looped. The car and the counterweight are raised and lowered in the hoistway by the rotation of the rotating body 6.

The cylindrical portion 11 is situated nearer to the open portion 2a than the sheave portion 10. Moreover, a center axis of the cylindrical portion 11 is coaxial with an axis of the main shaft 5.

The motor 7 is an annular motor provided between an outer circumferential surface of the rotating body 6 and an inner circumferential surface of the case part 2. Moreover, the motor 7 includes: a stator 14 fixed onto the inner circumferential surface of the case part 2; and a rotor 15 fixed onto the outer circumferential surface of the cylindrical portion 11 so as to be opposed to the stator 14.

A stator coil is provided to the stator 14. A rotating force is applied to the rotor 15 by power feeding to the stator coil. The rotating body 6 is rotated by the rotating force of the rotor 15.

The braking device 8 is provided inside the cylindrical portion 11. A brake support plate 16 for closing a center part of the open portion 2a is mounted to the case part 2 by bolts 17. The braking device 8 is mounted to the brake support plate 16 to be supported thereby. The brake support plate 16 is made of by a magnetic material (for example, iron or the like).

Moreover, the braking device 8 includes: brake shoes (braking bodies) 18 which can be displaced in a direction in which the brake shoes move into contact and away from the inner circumferential surface of the cylindrical portion 11; movable bodies 19, each being provided with the brake shoe 18, which are displaced along with the brake shoes 18; brake springs (urging bodies) 20, each being for urging the movable body 19 in a direction in which the brake shoe 18 comes into contact with the inner circumferential surface of the cylindrical portion 11; and an electromagnetic magnet 21 for displacing the movable bodies 19 in a direction in which the brake shoes 18 move away from the inner circumferential surface of the cylindrical portion 11 against a urging force of the brake springs 20.

Each of the movable bodies 19 includes: a brake arm 23 turnable on a support pin 22 provided to the brake support plate 16; and a mover 24 provided to the brake arm 23 so as to be opposed to the electromagnetic magnet 21. Each of the movable bodies 19 and the support pins 22 is made of a magnetic material (for example, iron or the like).

One end of each of the brake arms 23 is mounted to the support pin 22. The mover 24 is fastened to a middle portion of the brake arm 23 by a bolt 25. The brake shoe 18 is provided to a portion of the brake arm 23, which is situated between the support pin 22 and the mover 24. When the brake arm 23 is turned in a direction for bringing the brake shoe 18 into contact with the inner circumferential surface of the cylindrical portion 11, the mover 24 is displaced in a direction away from the electromagnetic magnet 21.

Each of the brake springs 20 is connected between a fixing member 26 (FIG. 2) fixed to the brake support plate 16 and the other end of the brake arm 23. Moreover, each of the brake springs 20 is contracted between the fixing member 26 and the brake arm 23. The brake arms 23 are urged in a direction for bringing the brake shoes 18 into contact with the inner circumferential surface of the cylindrical portion 11 by an elastic restoring force of the brake springs 20.

The electromagnetic magnet 21 is fixed to the brake support plate 16 by bolts 27. Moreover, the electromagnetic magnet 21 includes: an annular electromagnetic coil 28; and a field 29 to which the electromagnetic coil 28 is provided (FIG. 1) The field 29 is made of a magnetic material (for example, iron or the like). The electromagnetic magnet 21 generates an electromagnetic attraction force for attracting the movers 24 by power feeding to the electromagnetic coil 28. Note that, in FIG. 1, an outline (broken line) of the field 29 overlaps an outline (solid line) of the mover 24.

The movers 24 are displaced in a direction toward the electromagnetic magnet 21 by the electromagnetic attraction force of the electromagnetic magnet 21 against the urging force of the brake springs 20. As a result of the displacement of the movers 24 in the direction toward the electromagnetic magnet 21, the brake shoes 18 are displaced in a direction away from the inner circumferential surface of the cylindrical portion 11.

On a side surface of the sheave portion 10, a magnetic-flux leaking member (projecting portion) 30 which projects from the sheave portion 10 toward the electromagnetic magnet 21 is provided. The magnetic-flux leaking member 30 is made of a magneticmaterial (forexample, iron or the like). Themagnetic-flux leaking member 30 has an annular shape having a center on an axis of the main shaft 5. The magnetic-flux leaking member 30 is integrally formed with the rotating body 6. Moreover, the magnetic-flux leaking member 30 is opposed to each of the movers 24 and the field 29 with a predetermined gap therebetween.

A pair of the covers 31 for closing the open portion 2a, which interpose the brake support plate 16 therebetween, are mounted to the case part 2 by bolts 32. The covers 31 cover the braking device 8. Moreover, the covers 31 are made of a magnetic material (for example, iron or the like). Note that a support body for supporting the rotating body 6, the motor 7, and the braking device 8 includes the housing 1 and the brake support plate 16.

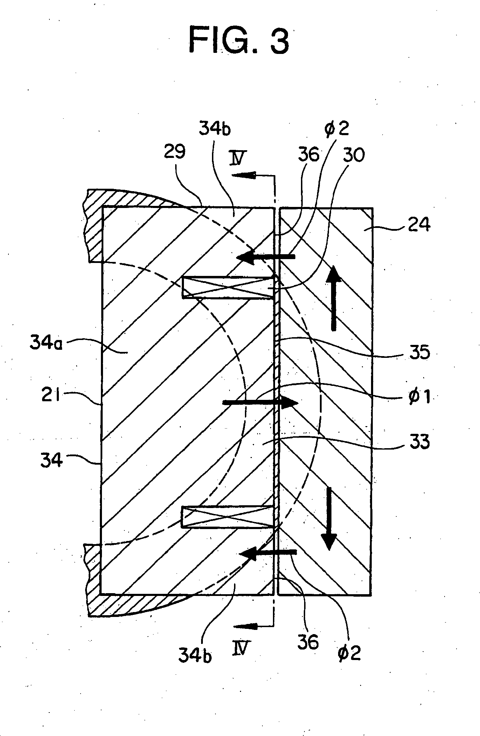

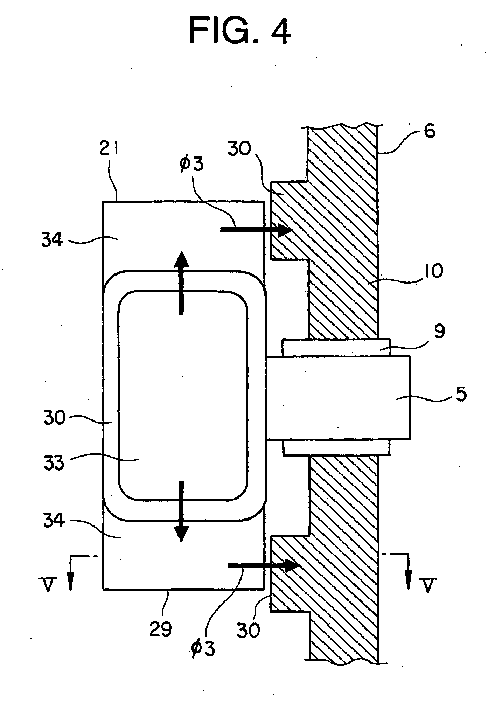

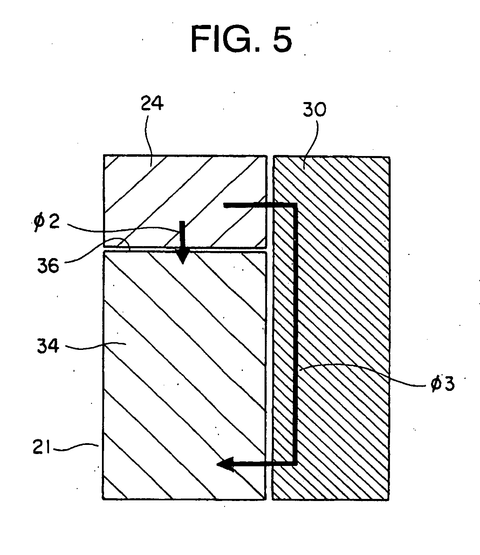

FIG. 3 is a sectional view showing a positional relationship between the electromagnetic magnet 21, the mover 24, and the magnetic-flux leaking member 30 illustrated in FIG. 2. FIG. 4 is a sectional view taken along the line IV-IV of FIG. 3. Further, FIG. 5 is a sectional view taken along the line V-V of FIG. 4. In the drawings, the magnetic-flux leaking member 30 is opposed to each of the mover 24 and the field 29 in a direction perpendicular to the direction of the displacement of the mover 24. A dimension of the gap between each of the mover 24 and the field 29 and the magnetic-flux leaking member 30 is larger than a maximum value of the dimension of the gap between the mover 24 and the electromagnetic magnet 21. It is desirable that the dimension of the gap between each of the mover 24 and the field 29 and the magnetic-flux leaking member 30 be substantially less than 5 mm.

The field 29 includes: an inner pole portion 33 which is caused to pass on the inner side of the electromagnetic coil 28; and an outer pole portion 34 in connection with the inner pole portion 33, which is provided on the outer side of the electromagnetic coil 28. In this example, the outer pole portion 34 includes: a base portion 34a; and a pair of opposed portions 34b, which project from both ends of the base portion 34a toward the mover 24 so as to interpose the electromagnetic coil 28 therebetween. The inner pole portion 33 projects from a middle portion of the base portion 34a toward the mover 24 between the opposed portions 34b so as to pass on the inner side of the electromagnetic coil 28.

The inner pole portion 33 is provided with an inner pole opposed surface 35 which is opposed to the mover 24. Each of the opposed portions 34b is provided with an outer pole opposed surface 36 which is opposed to the mover 24. A magnetic flux amount which magnetically saturates the inner pole opposed surface 35 is set to be larger than that for the outer pole opposed surface 36. Specifically, the inner pole portion 33 is provided with the inner pole opposed surface 35 which is magnetically saturated by a predetermined magnetic flux amount, whereas the outer pole portion 34 is provided with the outer pole opposed surfaces 36, each being magnetically saturated by a smaller magnetic flux amount than that for the inner pole opposed surface 35. In this example, an area of the inner pole opposed surface 35 is set to be larger than the sum of areas of the respective outer pole opposed surfaces 36 of the opposed portions 34b.

The electromagnetic attraction force for attracting the mover 24 is generated by the passage of the magnetic flux between the inner pole opposed surface 35 and the mover 24 and between each of the outer pole opposed surfaces 36 and the mover 24. When each of the outer pole opposed surfaces 36 is not magnetically saturated, the magnetic flux passing through the inner pole opposed surface 35 mainly passes through the outer pole opposed surfaces 36 through an intermediation of the mover 24. Specifically, when each of the outer pole opposed surfaces 36 is not magnetically saturated, the magnetic flux mainly passes through a first magnetic path from the inner pole portion 33 sequentially through the inner pole opposed surface 35, the mover 24, the outer pole opposed surfaces 36, the opposed portions 34b, and the base portion 34a back to the inner pole portion 33. Therefore, the sum of magnetic flux amounts φ2 passing through the respective outer pole opposed surfaces 36 is substantially the same as a magnetic flux amount φ1 passing through the inner pole opposed surface 35.

When the amount of power fed to the electromagnetic coil 28 increases, the magnetic flux amount φ1 passing through the inner pole opposed surface 35 and the magnetic flux amount φ2 passing through each of the outer pole opposed surfaces 36 both increase. As a result, each of the outer pole opposed surfaces 36 is first magnetically saturated.

When the amount of power fed to the electromagnetic coil 28 further increases, the magnetic flux amount φ1 passing through the inner pole opposed surface 35 increases. However, the magnetic flux amount φ2 passing through each of the outer pole opposed surfaces 36 is prevented from increasing by the magnetic saturation. Therefore, a part of the magnetic flux from the inner pole opposed surface 35 passes from the mover 24 to the outer pole portion 34 through the magnetic-flux leaking member 30 while avoiding each of the outer pole opposed surfaces 36. Specifically, the magnetic-flux leaking member 30 is set to be a magnetic body for allowing the magnetic flux to pass between the mover 24 and the outer pole portion 34, avoiding each of the outer pole opposed surfaces 36. Note that a magnetic path through which a part of the magnetic flux passes when each of the outer pole opposed surfaces 36 is magnetically saturated is set to be a second magnetic path from the inner pole portion 33 sequentially through the inner pole opposed surface 35, the mover 24, the magnetic-flux leaking member 30, and the outer pole portion 34 back to the inner pole portion 33.

When the amount of power fed to the electromagnetic coil 28 further increases, the magnetic flux amount φ1 passing through the inner pole opposed surface 35 and a magnetic flux amount φ3 passing through the magnetic-flux leaking member 30 both increase to magnetically saturate the inner pole opposed surface 35, while each of the outer pole opposed surfaces 36 is magnetically saturated. In this manner, the magnetic flux is caused to pass until the inner pole opposed surface 35 and each of the outer pole opposed surfaces 36 are both magnetically saturated. Note that the mover 24 has a shape that prevents the magnetic saturation thereof until the inner pole opposed surface 35 is magnetically saturated.

Next, an operation is described. When the car and the counterweight are stopped in the hoistway, the power feeding to the stator 14 and the electromagnetic coil 28 is stopped. At this time, the brake shoes 18 are pressed against the inner circumferential surface of the cylindrical portion 11 by the urging force of the brake springs 20. As a result, a braking force is applied to the rotating body 6 so as to prevent the rotation of the rotating body 6.

When the car and the counterweight are moved, the power is fed to the stator 14 and the electromagnetic coil 28. As a result, a rotating force is applied to the rotating body 6. Moreover, the electromagnetic attraction force is generated from the electromagnetic magnet 21 to displace each of the movers 24 in a direction toward the electromagnetic magnet 21 against the urging force of the brake springs 20. The displacement of the movers 24 turns the brake arms 23 to move the brake shoes 18 away from the inner circumferential surface of the cylindrical portion 11. As a result, the prevention of the rotation of the rotating body 6 is cancelled, thereby rotating the rotating body 6.

In the elevator hoist as described above, the inner pole opposed surface 35 which is magnetically saturated by the predetermined magnetic flux amount is provided to the inner pole portion 33, whereas the outer pole opposed surfaces 36, each being magnetically saturated by a smaller magnetic flux amount than that for the inner pole opposed surface 35, are provided to the outer pole portion 34. Moreover, the magnetic-flux leaking member 30 for allowing the magnetic flux to pass between the mover 24 and the outer pole portion 34 while avoiding each of the outer pole opposed surfaces 36, is opposed to each of the movers 24 and the field 29. Therefore, even when each of the outer pole opposed surfaces 36 is magnetically saturated, the magnetic flux is allowed to pass between the mover 24 and the outer pole portion 34 through an intermediation of the magnetic-flux leaking member 30. As a result, the magnetic flux amount passing through the inner pole opposed surface 35 can be increased while the outer pole opposed surfaces 36 are magnetically saturated. As a result, the electromagnetic attraction force generated by the electromagnetic magnet 21 can be prevented from being reduced.

Specifically, for example, when a part of the magnetic flux passing through the inner pole opposed surface 35 leaks to the rotating body 6 through an intermediation of the movers 24, the magnetic flux amounts passing through the outer pole opposed surfaces 36 become smaller than the magnetic flux amount passing through the inner pole opposed surface 35. Therefore, when the magnetic flux amount for achieving the magnetic saturation is the same for the inner pole opposed surface 35 and each of the outer pole opposed surfaces 36, each of the outer pole opposed surfaces 36 is not magnetically saturated even when the inner pole opposed surface 35 is magnetically saturated as long as a part of the magnetic flux leaks. Thus, the electromagnetic attraction force cannot be increased so as to be close to a maximum value of attraction performance of the electromagnetic magnet 21. As a result, an electromagnetic attraction force of the electromagnetic magnet 21 is reduced. On the other hand, in the elevator hoist according to this embodiment, the inner pole opposed surface 35 and each of the outer pole opposed surfaces 36 can be both magnetically saturated. Thus, the electromagnetic attraction force can be increased so as to be close to the maximum value of attraction performance of the electromagnetic magnet 21. As a result, the electromagnetic attraction force can be prevented from being reduced.

Moreover, it is possible to cause the magnetic flux leaking from the mover 24 to pass through the magnetic-flux leaking member 30. Therefore, for example, the magnetic flux amount passing between each of the brake arms 23 and each of the support pins 22 can be reduced. As a result, the attraction force can be prevented from being increased between each of the brake arms 23 and each of the support pins 22, thereby reducing a sliding resistance of the brake arms 23 with respect to the support pins 22. Thus, the operation of the braking device 8 can be smoothened.

Moreover, the magnetic-flux leaking member 30 is the projecting portion which projects from the rotating body 6 toward the electromagnetic magnet 21, and hence the magnetic-flux leaking member 30 can be easily located at a predetermined position. Further, by integrally forming the magnetic-flux leaking member 30 with the rotating body 6, the number of components can be prevented from being increased. As a result, a simple structure can be obtained.

### Second Embodiment (not part of the invention)

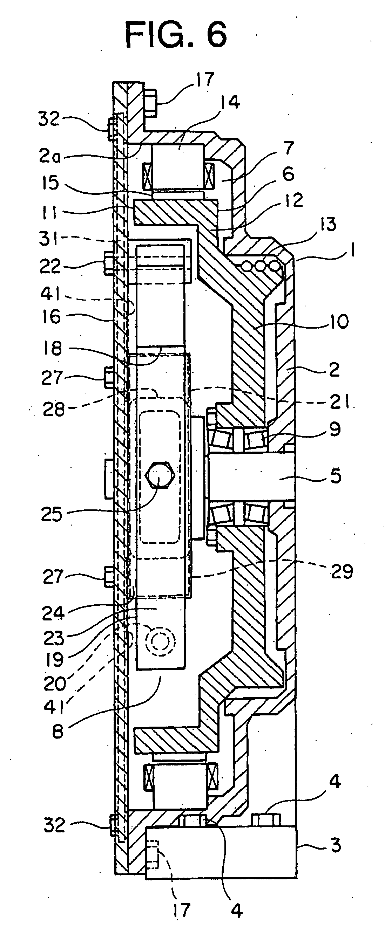

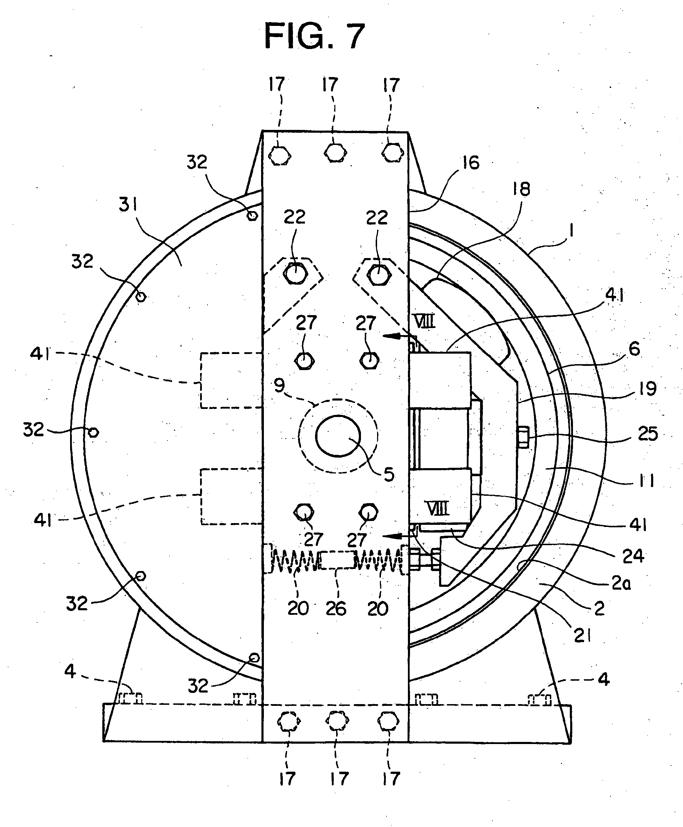

FIG. 6 is a longitudinal sectional view illustrating an elevator hoist according to a second embodiment. FIG. 7 is a front view illustrating the elevator hoist illustrated in FIG. 6. In the drawings, a plurality of magnetic-flux leaking members 41, each being opposed to the mover 24 and the field 29, are provided to the covers 31. Each of the magnetic-flux leaking members 41 is a plate-like magnetic body which causes the magnetic flux to pass between each of the movers 24 and the outer pole portion 34 while avoiding each of the outer pole opposed surfaces 36. The magnetic-flux leaking members 41 are provided between the covers 31 and the braking device 8. Note that the brake support plate 16 is also opposed to the field 29.

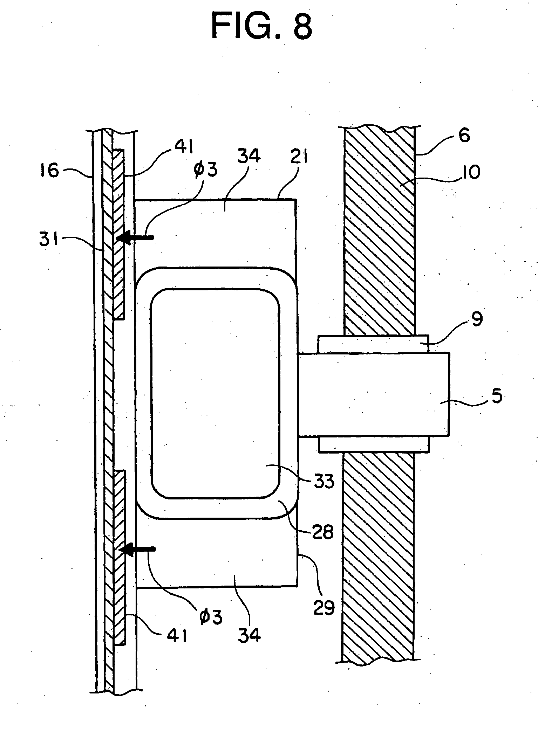

FIG. 8 is a sectional view taken along the line VIII-VIII of FIG. 7. In the drawing, a dimension of a gap between each of the mover 24 and the field 29 and each of the magnetic-flux leaking members 41 is set to be larger than a maximum value of the dimension of the gap between the electromagnetic magnet 21 and the mover 24. It is desirable that the dimension of the gap between each of the mover 24 and the field 29 and each of the magnetic-flux leaking members 41 be substantially less than 5 mm.

When the amount of power fed to the electromagnetic coil 28 increases to electrically saturate each of the outer pole opposed surfaces 36, the magnetic flux amount passing through each of the outer pole opposed surfaces 36 is prevented from increasing even if the amount of power fed to the electromagnetic coil 28 further increases. Therefore, when the amount of power fed to the electromagnetic coil 28 is increased while each of the outer pole opposed surfaces 36 is magnetically saturated, a part of the magnetic flux from the inner pole opposed surface 35 avoids each of the outer pole opposed surfaces 36 to pass through the magnetic-flux leaking members 41. Specifically, when the outer pole opposed surfaces 36 are magnetically saturated, a part of the magnetic flux from the inner pole opposed surface 35 mainly passes through the second magnetic path from the inner pole portion 33 sequentially through the inner pole opposed surface 35, the mover 24, the magnetic-flux leaking members 41, and the outer pole portion 34 back to the inner pole portion 33. Note that a part of the magnetic flux from the inner pole opposed surface 35 also passes through a magnetic path from the inner pole portion 33 sequentially through the inner pole opposed surface 35, the mover 24, the magnetic-flux leaking members 41, the brake support plate 16, and the outer pole portion 34 back to the inner pole portion 33 because the brake support plate 16 is opposed to the field 29.

When the amount of power fed to the electromagnetic coil 28 further increases, the magnetic flux amount passing through the inner pole opposed surface 35 and the magnetic flux amount φ3 passing through the magnetic-flux leaking members 41 increase to also magnetically saturate the inner pole opposed surface 35. The remaining structure is the same as that of the first embodiment.

In the elevator hoist as described above, the magnetic-flux leaking members 41 are provided to the covers 31 for covering the braking device 8. Therefore, a space in the case part 2 can be efficiently used to locate the magnetic-flux leaking members 41 at predetermined positions.

### Third Embodiment (not part of the invention)

FIG. 9 is a longitudinal sectional view illustrating an elevator hoist according to a third embodiment. Moreover, FIG. 10 is a sectional view illustrating a principal part of the hoist illustrated in FIG. 9. In the drawings, the housing 1 includes: a case part 51; and the leg part 3 for supporting the case part 51.

The case part 51 is arranged with a thickness direction of the case part 51 in alignment with a horizontal direction. A dimension of the case part 51 in the thickness direction is smaller than a radial dimension of the case part 51. The case part 51 includes: a brake accommodating portion 51a which is open in the thickness direction of the case part 51; and a motor accommodating groove 51b which is open in the direction opposite to the direction in which the brake accommodating portion 51a is open and surrounds the brake accommodating portion 51a.

The main shaft 5 is arranged along the thickness direction of the case part 51. Moreover, the main shaft 5 projects outward from the case part 51. The rotating body 6 is rotatably provided to the main shaft 5,

In the motor accommodating groove 51b, the motor 7 is provided. In addition, the cylindrical portion 11 of the rotating body 6 is inserted into the motor accommodating groove 51b. The stator 14 of the motor 7 is provided on an inner circumferential surface of the motor accommodating groove 51b, whereas the rotor 15 of the motor 7 is provided on an outer circumferential surface of the cylindrical portion 11.

A magnetic-flux leaking member 52 is provided to the case part 51, which projects into the brake accommodating portion 51a. The magnetic-flux leaking member 52 is a magnetic body for allowing the magnetic flux to pass between the mover 24 and the outer pole portion 34 while avoiding each of the outer pole opposed surfaces 36. The magnetic-flux leaking member 52 is integrally formed with the case part 51. The braking device 8 is provided in the brake accommodating portion 51a.

Each of the electromagnetic magnet 21 and the movers 24 is opposed to the magnetic-flux leaking member 52. The magnetic-flux leaking member 52 is held in contact with the electromagnetic magnet 21 and is opposed to the mover 24 with a predetermined distance therebetween. The electromagnetic magnet 21 is fastened by the bolts 27 while being interposed between the brake support plate 16 and the magnetic-flux leaking member 52. A dimension of the gap between each of the movers 24 and the magnetic-flux leaking member 52 is set to be larger than a maximum value of a dimension of a gap between the electromagnetic magnet 21 and each of the movers 24. It is desirable that the dimension of the gap between each of the movers 24 and the magnetic-flux leaking member 52 be substantially less than 5 mm.

Note that a motor cover 53 for closing the motor accommodating groove 51b is provided to an outer circumferential portion of the case part 51. Moreover, the case part 51 is provided with open portions (not shown) for allowing the brake shoes 18 to pass therethrough so as to allow the brake shoes 18 in the brake accommodating portion 51a to come into contact with and move away from the inner circumferential surface of the cylindrical portion 11.

When the amount of power fed to the electromagnetic coil 28 increases to electrically saturate each of the outer pole opposed surfaces 36, the magnetic flux amount passing through each of the outer pole opposed surfaces 36 is prevented from increasing even if the amount of power fed to the electromagnetic coil 28 further increases. Therefore, when the amount of power fed to the electromagnetic coil 28 is increased while each of the outer pole opposed surfaces 36 is magnetically saturated, a part of the magnetic flux from the inner pole opposed surface 35 avoids each of the outer pole opposed surfaces 36 to pass through the magnetic-flux leaking members 52. Specifically, when the outer pole opposed surfaces 36 are magnetically saturated, a part of the magnetic flux from the inner pole opposed surface 35 passes through the second magnetic path from the inner pole portion 33 sequentially through the inner pole opposed surface 35, the mover 24, the magnetic-flux leaking members 52, and the outer pole portion 34 back to the inner pole portion 33.

When the amount of power fed to the electromagnetic coil 28 further increases, the magnetic flux amount passing through the inner pole opposed surface 35 and the magnetic flux amount φ3 passing through the magnetic-flux leaking members 52 increase to also magnetically saturate the inner pole opposed surface 35. The remaining structure is the same as that of the first embodiment.

In the elevator hoist described above,the magnetic-flux leaking member 52 is provided to the case part 51. Therefore, the magnetic-flux leaking member 52 can be easily provided at a predeterminedposition. Moreover,the magnetic-fluxleaking member 52 is integrally formed with the case part 51, and hence the number of components can be reduced.

Note that, though the magnetic-flux leaking member 52 is provided to the case part 51 in the example described above, this third embodiment can be combined with the structure of the second embodiment. Specifically, themagnetic-fluxleakingmembers 41 may be provided to the covers 31, while the magnetic-flux leaking member 52 is provided to the case part.

Moreover, the gaps are respectively present between each of the movers 24 and the magnetic-flux leaking member and between the field 29 and the magnetic-flux leaking member in the first and second embodiments. However, among the movers 24 and the field 29, the magnetic-flux leaking member may be held in contact with the field 29.

## Claims

1. An elevator hoist comprising:
a rotating body (6) having a sheave portion (10) around which a main rope (13) for suspending a car is looped, the rotating body (6) being rotatable about an axis; a brake support plate (16), and
a braking device (8) comprising: a braking body (18) displaceable in a direction toward and away from the rotating body (6); a movable body (19) provided with the braking body (18), the movable body (19) being displaced along with the braking body (18) ; an urging body (20) for urging the movable body (19) in a direction in which the braking body (18) is brought into contact with the rotating body (6); and an electromagnetic magnet (21) comprising an annular electromagnetic coil (28) and a field (29) to which the electromagnetic coil (28) is provided, the electromagnetic magnet (21) being for generating an electromagnetic attraction force against an urging force of the urging body (20) by power feeding to the electromagnetic coil (28) so as to displace the movable body (19) in a direction in which the braking body (18) moves away from the rotating body (6), wherein:
the field (29) comprises: an inner pole portion (33) passing on an inner side of the electromagnetic coil (28); and an outer pole portion (34) in connection with the inner pole portion (33), the outer pole portion (34) being provided on an outer side of the electromagnetic coil (28);
the inner pole portion (33) is provided with an inner pole opposed surface (35) opposed to the movable body (19), the inner pole opposed surface (35) being magnetically saturated with a predetermined magnetic flux amount;
the outer pole portion (34) is provided with outer pole opposed surfaces (36) opposed to the movable body (19), each of the outer pole opposed surfaces (36) being magnetically saturated with a smaller magnetic flux amount than the predetermined magnetic flux amount for the inner pole opposed surface (35); and
each of the movable body (19) and the field (29) is opposed to a magnetic-flux leaking member (30) for allowing a magnetic flux to avoid the outer pole opposed surfaces (36) and pass between the movable body (19) and the outer pole portion (34),
the movable body (19) including a brake arm (23) turnable on a support pin (22) provided to the brake support plate (16) and a mover (24) opposed to the electromagnetic magnet (21),
the mover (24) is arranged to be displaced in a direction toward the electromagnetic magnet (21) by an electromagnetic attraction force of the electromagnetic magnet (21) against an urging force of the urging body (20), **characterized in that**
the magnetic-flux leaking member (30) comprises a projecting portion which projects from the rotating body (6) toward the electromagnetic magnet (21),
the projecting portion being opposed to each of the mover (24) and the field (29) in a direction perpendicular to the direction of the displacement of the mover (24).

2. An elevator hoist according to claim 1, further comprising a support body for supporting the rotating body (6) and the braking device (8),
wherein the magnetic-flux leaking member (52) is provided to the support body.

3. An elevator hoist according to claim 1, further comprising a support body for supporting the rotating body (6) and the braking device (8), wherein:
the support body includes a brake cover (31) for covering the braking device (8); and
the magnetic-flux leaking member (41) is provided to the brake cover (31).

## Patentansprüche

1. Aufzugwinde mit:
einem Drehkörper (6) mit einem Seilrollenabschnitt (10), um welchen ein Hauptseil (13), an dem eine Kabine hängen kann, gewickelt ist, wobei der Drehkörper (6) um eine Achse drehbar ist, einer Abstützplatte für eine Bremse (16) und
einer Bremseinrichtung (8) mit: einem Bremskörper (18), der in einer Richtung hin zu und weg von dem Drehkörper (6) versetzbar ist, einem beweglichen Körper (19), der mit dem Bremskörper (18) versehen ist, wobei der bewegliche Körper (19) zusammen mit dem Bremskörper (18) verschoben wird, einem Vorspannkörper (20), um den beweglichen Körper (19) in einer Richtung vorzuspannen, in welcher der Bremskörper (18) in Kontakt mit dem Drehkörper (6) gebracht wird, und einem elektromagnetischen Magneten (21) mit einer ringförmigen elektromagnetische Spule und einem Körper (22), an dem die elektromagnetische Spule (28) vorgesehen ist, wobei der elektromagnetische Magnet (21) dazu dient, eine elektromagnetische Anziehungskraft gegen eine Vorspannkraft des Vorspannkörpers (20) durch das Zuführen von Strom zu elektromagnetische Spule (28) zu erzeugen, um somit den beweglichen Körper (19) in einer Richtung zu versetzen, in welcher sich der Bremskörper (18) weg von dem Drehkörper (6) bewegt, wobei:
der Körper aufweist: einen inneren Polabschnitt (33), der auf einer inneren Seite der elektromagnetischen Spule (28) hindurchtritt, und einen äußeren Polabschnitt (34) in Verbindung mit dem inneren Polabschnitt (33), wobei der äußere Polabschnitt (34) auf einer äußeren Seite der elektromagnetischen Spule (28) vorgesehen ist,
wobei der innere Polabschnitt (33) mit einer Oberfläche (35), die dem inneren Pol gegenüberliegt, versehen ist, welche dem beweglichen Körper (19) gegenüberliegt, wobei die Oberfläche (35), die dem inneren Pol gegenüberliegt, durch einen vorher festgelegten magnetischen Flussbetrag magnetisch gesättigt ist,
wobei der äußere Polabschnitt (34) mit dem äußeren Pol gegenüberliegenden Oberflächen (36) gegenüber dem beweglichen Körper (19) versehen ist, wobei jede der dem äußeren Pol gegenüberliegenden Oberflächen (36) magnetisch mit einem kleineren magnetischen Flussbetrag als der vorher festgelegte magnetische Flussbetrag für die dem inneren Pol gegenüberliegende Oberfläche (35) magnetisch gesättigt wird, und
sowohl der bewegliche Körper (19) als auch der Körper (29) einem Magnetfluss-Leckelement (30) gegenüberliegen, um es einem Magnetfluss zu ermöglichen, die dem äußeren Pol gegenüberliegenden Oberflächen (30) zu umgehen und zwischen dem beweglichen Körper (19) und dem äußeren Polabschnitt (34) hindurchzutreten,
wobei der bewegliche Körper (19) einen Bremsarm (23), der auf einem Abstützstift (22) drehbar ist, welcher an der Abstützplatte (16) für eine Bremse vorgesehen ist, und einen Beweger (24) gegenüber dem elektromagnetischen Magneten (21) aufweist,
wobei der Beweger (24) dazu ausgestaltet ist, in einer Richtung zu dem elektromagnetischen Magneten (21) durch eine elektromagnetische Anziehungskraft des elektromagnetischen Magneten (21) gegen eine Vorspannkraft des Vorspannkörpers (20) versetzt zu werden, **dadurch gekennzeichnet, dass**
das Magnetfluss-Leckelement (30) einen Vorstehabschnitt aufweist, der von dem Drehkörper (6) zu dem elektromagnetischen Magneten (21) vorsteht,
wobei der Vorstehabschnitt sowohl dem Beweger (24) als auch dem Körper (29) in einer Richtung senkrecht zu der Richtung der Versetzung des Bewegers (24) gegenüberliegt.

2. Aufzugwinde nach Anspruch 1, ferner mit einem Abstützkörper zum Abstützen des Drehkörpers (6) und der Bremseinrichtung (8),
wobei das Magnetfluss-Leckelement (52) an dem Abstützkörper vorgesehen ist.

3. Aufzugwinde nach Anspruch 1, ferner mit einem Abstützkörper zum Abstützen des Drehkörpers (6) und der Bremseinrichtung (8), wobei:
der Abstützkörper eine Bremsabdeckung (31) zum Abdecken der Bremseinrichtung (8) aufweist und
das Magnetfluss-Leckelement (41) an der Bremsabdeckung (31) vorgesehen ist.

## Revendications

1. Dispositif de levage d'ascenseur comprenant :
un corps rotatif (6) ayant une partie de poulie à gorge (10) autour de laquelle est enroulé un câble principal (13) pour suspendre une cabine, le corps rotatif (6) pouvant tourner autour d'un axe ; une plaque de support de frein (16), et
un dispositif de freinage (8) comprenant : un corps de freinage (18) pouvant être déplacé dans une direction vers et à distance du corps rotatif (6) ; un corps mobile (19) prévu avec un corps de freinage (18), le corps mobile (19) étant déplacé conjointement avec le corps de freinage (18) ; un corps de poussée (20) pour pousser le corps mobile (19) dans une direction dans laquelle le corps de freinage (18) est amené en contact avec le corps rotatif (6) ; et un aimant électromagnétique (21) comprenant une bobine électromagnétique annulaire (28) et un champ (29) dans lequel la bobine électromagnétique (28) est prévue, l'aimant électromagnétique (21) étant prévu pour générer une force d'attraction électromagnétique contre une force de poussée du corps de poussée (20) en alimentant la bobine électromagnétique (28) afin de déplacer le corps mobile (19) dans une direction dans laquelle le corps de freinage (18) s'éloigne du corps rotatif (6), dans lequel :
le champ (29) comprend : une partie de pôle interne (33) passant sur un côté interne de la bobine électromagnétique (28) ; et une partie de pôle externe (34) en connexion avec la partie de pôle interne (33), la partie de pôle externe (34) étant prévue sur un côté externe de la bobine électromagnétique (28) ;
la partie de pôle interne (33) est prévue avec une surface opposée de pôle interne (35) opposée au corps mobile (19), la surface opposée de pôle interne (35) étant magnétiquement saturée avec une quantité de flux magnétique prédéterminée ;
la partie de pôle externe (34) est prévue avec des surfaces opposées de pôle externe (36) opposées au corps mobile (19), chacune des surfaces opposées de pôle externe (36) étant magnétiquement saturée avec une quantité de flux magnétique inférieure à la quantité de flux magnétique prédéterminée pour la surface opposée de pôle interne (35) ; et
chacun parmi le corps mobile (19) et le champ (29) est opposé à un élément de fuite de flux magnétique (30) pour permettre à un flux magnétique d'éviter les surfaces opposées de pôle externe (36) et de passer entre le corps mobile (19) et la partie de pôle externe (34),
le corps mobile (19) comprenant un bras de frein (23) pouvant tourner sur une broche de support (22) prévue sur la plaque de support de frein (16), et un rouage (24) opposé à l'aimant électromagnétique (21),
le rouage (24) est agencé pour être déplacé dans une direction allant vers l'aimant électromagnétique (21) par une force d'attraction électromagnétique de l'aimant électromagnétique (21) contre une force de poussée du corps de poussée (20), **caractérisé en ce que** :
l'élément de fuite de flux magnétique (30) comprend une partie en saillie qui fait saillie du corps rotatif (6) vers l'aimant électromagnétique (21),
la partie en saillie étant opposée à chacun parmi le rouage (24) et le champ (29) dans une direction perpendiculaire à la direction du déplacement du rouage (24).

2. Dispositif de levage d'ascenseur selon la revendication 1, comprenant en outre un corps de support pour supporter le corps rotatif (6) et le dispositif de freinage (8),
dans lequel l'élément de fuite de flux magnétique (52) est prévu sur le corps de support.

3. Dispositif de levage d'ascenseur selon la revendication 1, comprenant en outre un corps de support pour supporter le corps rotatif (6) et le dispositif de freinage (8), dans lequel :
le corps de support comprend un couvercle de frein (31) pour recouvrir le dispositif de freinage (8) ; et
l'élément de fuite de flux magnétique (41) est prévu sur le couvercle de frein (31).
